# EUROPÄISCHE PATENTSCHRIFT

(11) **EP 0 989 744 B1**
(45) Veröffentlichungstag und Bekanntmachung des Hinweises auf die Patenterteilung: **26.07.2006**
(21) Anmeldenummer: 99117679.3
(22) Anmeldetag: 08.09.1999
(51) Int. Cl.: H04N 7/18, F21S 8/00

(54) **Bildübertragungseinrichtung**
Image transferring device
Dispositif de transfert d'image

(30) Priorität: 22.09.1998 DE 19843288
(43) Veröffentlichungstag der Anmeldung: 29.03.2000
(73) Patentinhaber: MAQUET GmbH & Co. KG, 76437 Rastatt (DE)
(72) Erfinder: Schulz, Mark-Olaf, 63546 Hammersbach (DE); Kolloch, Ulrich, 63500 Seligenstadt (DE)
(74) Vertreter: Thoenes, Dieter

(56) Entgegenhaltungen:
- DE-A- 19 653 507
- DE-C- 19 523 377

## Beschreibung

Die Erfindung betrifft eine Bildübertragungseinrichtung mit einer Video-Kamera und einer Kontrollvorrichtung mit einem Bildschirm und wenigstens einer Steuereinrichtung, wobei wenigstens ein Bildsensor der Kamera in einer verstellbaren Lagerung gehalten ist und wenigstens eine mittels der Steuereinrichtung betätigte Antriebsvorrichtung zur Positionierung wenigstens des Bildsensors relativ zum Aufnahmeobjekt vorgesehen ist.

Aus der US 37 27 532 ist eine Video-Kamera bekannt, die auf einer verstellbaren Halterung beweglich angeordnet ist; es handelt sich dabei um ein sphärisches Kameramodellsystem, bei dem die Kamera einen simulierten Flug über einer auf der Hohlseite einer sphärischen Kugel dargestellten Landschaft ausführt, wobei das von der Kamera erzeugte Bild einer Art Modell-Flugzeugkanzel zugeführt wird, in dem ein Flugschüler die Steuereinrichtung eines Flugsimulators bedient und das von Kamera in Abhängigkeit der Steuereinrichtung erfaßte Modellgelände als überflogene Landschaft sieht.

Weiterhin ist aus der DE 195 23 377 C1 ein Verfahren zur Übertragung von Video-Signalen sowie ein Bildübertragungssystem für Operationsleuchten bekannt. Hierzu ist eine Operationsleuchte mit einer Video-Kamera im Bereich des Leuchtengehäuses zur externen bildlichen Darstellung des Operationsfeldes mittels einer Bildschirm/Kontrollvorrichtung vorgesehen, wobei das Leuchtengehäuse über eine verstellbare Aufhängung mit einer Aufhängekonsole im Dekkenbereich eines Operationssaales verbunden ist.

Als problematisch erweist sich bei einer solchen Einrichtung, daß eine Verstellung der Operationsleuchte relativ zum Aufnahmeobjekt bzw. Operationsgebiet auch eine Verstellung der Orientierung des Bildes zum Operationsfeld zur Folge hat; hierdurch erscheint dem Operateur unter Umständen eine winkelmäßige Verschiebung bzw. Verdrehung zwischen Operationsfeld und Bildwiedergabe auf dem Monitor.

Aufgabe der Erfindung ist es, eine Bildschirmausgabe zu erzielen, die der Blickrichtung des Chirurgen auf das Operationsfeld weitgehend entspricht; die Bildschirmausgabe des Monitors soll dabei unabhängig von der Stellung des Leuchtenkörpers sein; weiterhin soll eine bessere Übersicht über den Operationsverlauf für Assistenzpersonal und ein evtl. zusehendes Auditorium erzielt werden.

Die Aufgabe wird dadurch gelöst, daß die Video-Kamera mit einem Leuchtenkörper einer Operationsleuchte verbunden ist, der mittels verstellbarer Aufhängung in einer Befestigung gehalten ist, wobei zumindest der Bildsensor der Video-Kamera um deren optische Achse gegenüber den Leuchten körper drehbar gelagert ist.

Bevorzugte Ausgestaltungen der Erfindung sind in den Ansprüchen 2 bis 6 angegeben.

Als besonders vorteilhaft erweist es sich, daß eine nachträgliche Einstellung des Monitorbildes in seiner Ausrichtung passend zur Blickrichtung des Chirurgen zu einer rascheren Übersicht und höheren Sicherheit führt; darüberhinaus stellt die verbesserte Übersicht des Operationsfeldes auch eine Hilfe für das Assistenzpersonal des Chirurgen dar, da es eine verbesserte Koordination der Assistenzarbeiten ermöglicht; weiterhin ermöglicht das erfindungsgemäße Bildübertragungssystem auch eine verbesserte Übersicht bei Videoübertragungen von Operationen vor einem größeren Auditorium, insbesondere im Hinblick auf zusätzliche Erläuterungen des Chirurgen während der Operation.

In einer bevorzugten Ausgestaltung der Erfindung wird die Video-Kamera im Zentrum der Lichtaustrittsseite des Leuchtenkörpers der Operationsleuchte gehalten, wobei die Achse des Drehlagers entlang der optischen Achse der Video-Kamera verläuft; hierbei erweist es sich als besonders vorteilhaft, daß eine zentrische Drehung des Bildes möglich ist; darüberhinaus ist es auch möglich, einen Markierungspunkt bzw. einen Hilfspunkt innerhalb des darzustellenden Operationsfeldes entlang der Achse als Markierung einzusetzen, um eine Orientierungshilfe für die Video-Kamera-Positionierung bei zwei örtlich getrennten Operationsfeldern eines Patienten zu erzielen; ein solcher Fall tritt beispielsweise bei einer Bypass-Operation am Herzen auf, wobei gleichzeitig Material der Blutbahn aus einem entfernt liegenden Körperteil (z.B. Bein) des Patienten entnommen wird.

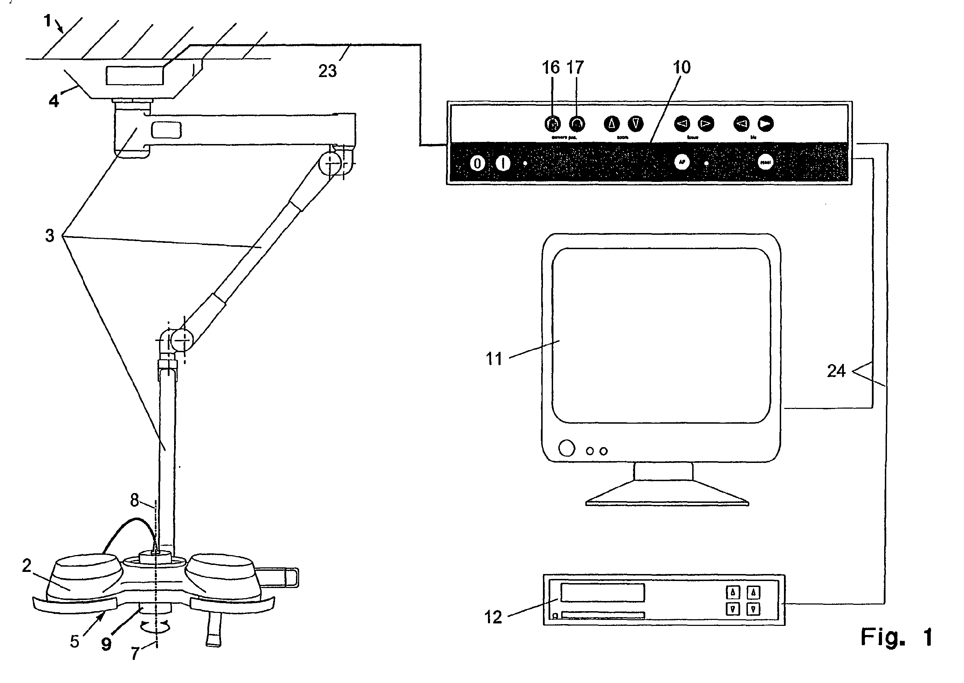

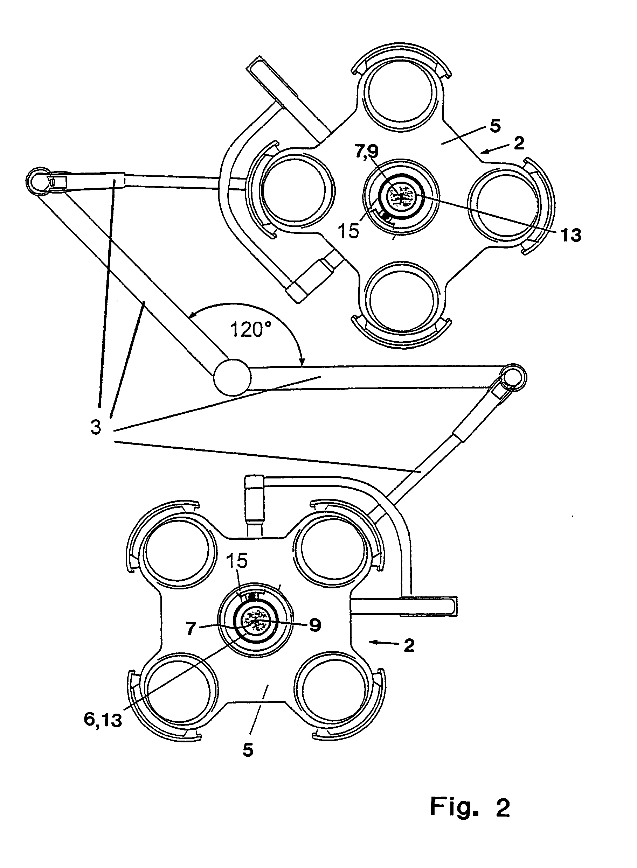

Im folgenden ist der Gegenstand der Erfindung anhand der Figuren 1 und 2 näher erläutert.

Figur 1 zeigt in schematischer Darstellung eine Operationsleuchte mit stationärer Deckenbefestigung, zusammen mit Videoanlage und Steuergerät;

Figur 2 zeigt einen Leuchtenkörper in seiner Ausgangslage (Position I) sowie den gleichen um einen vorgegebenen Winkel von 120° aus seiner Ausgangslage verschobenen Leuchtenkörper (Position II) mit seiner in Draufsicht erkennbaren Lichtaustrittsseite.

Gemäß Figur 1 enthält die Leuchte einen in Seitenansicht dargestellten Leuchtenkörper 2, welcher mittels Aufhängung 3 an einer stationären Befestigung 4 im Deckenbereich 1 eines Operationsraumes gehalten wird. Die Leuchte weist eine übliche kardanische Aufhängung auf, wobei die zum Operationsfeld gerichtete Lichtaustrittsseite 5 zusammen mit dem Leuchtenkörper 2 um alle sechs Freiheitsgrade schwenkbar bzw. bewegbar ist.

Weiterhin ist im Bereich der Lichtaustrittsseite 5 des Leuchtenkörpers 2 eine schematisch dargestellte Optik 9 für eine innerhalb des Leuchtenkörpers angeordneten Video-Kamera erkennbar. Die optische Achse der Optik der Video-Kamera ist mit Ziffer 7 bezeichnet, wobei diese gleichzeitig mit der durch das Zentrum der Lichtaustrittsseite geführten Achse 8 des Leuchtenkörpers 2 zusammenfällt. Die hier in Figur 1 nicht näher dargestellte Video-Kamera ist aufgrund ihrer ringförmigen Lagerung entlang der Achse 7 drehbar gelagert, so daß irgendwelche Verstellungen des Leuchtenkörpers 2 wie beispielsweise seitliches Verschwenken, die auch eine Umorientierung des auf dem Monitor 11 erkennbaren Bildes des Operationsfeldes nach sich ziehen, mit Hilfe eines Stellelementes so nachgeregelt werden können, daß aus der Blickrichtung des Chirurgen gesehen Operationsfeld und Monitorbild unabhängig von der Stellung des Leuchtenkörpers die gleiche Orientierung aufweisen. Dabei ist es möglich, ein Links/Rechtsschaltelement in einer Steuereinrichtung 10 vorzusehen.

Die zugehörige Steuereinrichtung 10 weist Steuertasten für Zu- bzw. Abschalten von Leuchten- und Kamerafunktionen auf, wobei die Steuertasten 16, 17 als Links-Rechts-Schalter für die Drehung der Video-Kamera dienen. Die zugehörigen Verbindungsleitungen zur Leuchte bzw. zur Videoanlage mit Monitor 11 und Video-Rekorder 12 sind mit Ziffer 23 und 24 bezeichnet.

Gemäß Figur 2 ist die Lichtaustrittsseite 5 bzw. Unterseite des zum Operationsfeld gerichteten Leuchtenkörpers 2 erkennbar; die hier nur mit ihrer Front 13 sowie der Optik 9 dargestellte Video-Kamera 6 befindet sich in einer ringförmigen Halterung als Drehlager 15, wobei die Video-Kamera mittels der zuvor genannten Steuereinrichtung 10 (nach Figur 1) zentrisch zu ihrer Achse 7 durch Stellelemente bzw. einen Servomotor drehbar angeordnet ist; die Video-Kamera 6 erzeugt in Position I des Leuchtenkörpers 2 auf Monitor 11 (nach Figur 1) ein aufrechtstehendes

Bild; bei einer Verschwenkung des Leuchtenkörpers 2 in Position II um beispielsweise 120° würde auf dem Monitor 11 ein ebenfalls um 120° verdrehtes Bild erscheinen, so daß eine ursprünglich in vertikaler Richtung auf dem Bildschirm erscheinende Linie des Körpers (z.B. eine gedachte Verbindungsachse beider Schultergelenke) nach Verschwenken des Leuchtenkörpers 2 zu Position II ebenfalls um 120° verdreht auf dem Monitor erscheint.

Es ist nun möglich, durch Steuerkommandos von Steuereinrichtung 10 (Figur 1) aus die Stellmotoren des Drehlagers 15 der Video-Kamera 6 so lange laufen zu lassen, bis die ursprüngliche Ausrichtung des Bildes auf Monitor 11 (Figur 1) wiedergegeben wird; beispielsweise müßte bei einem Rechtsschwenk des Leuchtenkörpers mit Kamera diese wieder um 120° nach links verdreht werden, so daß die Ausgangsposition (bzw. ursprüngliche Orientierung) des Bildes auf Monitor 11 wieder erscheint. Somit wird dem Chirurgen und seinem Assistenzpersonal stets eine ausreichende Übersicht geboten, die von der aktuellen Stellung bzw. Nachstellung der Operationsleuchte unabhängig ist.

## Patentansprüche

1. Bildübertragungseinrichtung mit einer Video-Kamera und einer Kontrollvorrichtung mit Bildschirm und Steuereinrichtung, wobei wenigstens ein Bildsensor der Kamera in einer verstellbaren Lagerung gehalten ist und wenigstens eine mittels der Steuereinrichtung betätigte Antriebsvorrichtung zur Positionierung wenigstens des Bildsensors relativ zum Aufnahmeobjekt vorgesehen ist, **dadurch gekennzeichnet, daß** die Video-Kamera (6) mit einem Leuchtenkörper (2) einer Operationsleuchte verbunden ist, der mittels verstellbarer Aufhängung in einer Befestigung (4) gehalten ist, wobei zumindest der Bildsensor der Video-Kamera (6) um deren optische Achse (7) gegenüber dem Leuchten körper (2) drehbar gelagert ist.

2. Bildübertragungseinrichtung nach Anspruch 1, **dadurch gekennzeichnet, daß** die Video-Kamera (6) in einem im Leuchtenkörper (2) der Operationsleuchte befindlichen Drehlager (15) gehalten wird, wobei die Achse des Drehlagers wenigstens parallel zur optischen Achse (7) der Video-Kamera (6) verläuft.

3. Bildübertragungseinrichtung nach Anspruch 2, **dadurch gekennzeichnet, daß** die Achse des Drehlagers (15) entlang der optischen Achse (7) der Video-Kamera (6) verläuft.

4. Bildübertragungseinrichtung nach einem der Ansprüche 1 bis 3, **dadurch gekennzeichnet, daß** das Drehlager (15) in eine Öffnung auf der der Lichtaustrittsseite abgewandten Rückseite des Leuchtenkörpers (2) entlang der Achse (7) einsetzbar ist.

5. Bildübertragungseinrichtung nach Anspruch 4, **dadurch gekennzeichnet, daß** Drehlager (15) und Video-Kamera (6) zusammen ein kompaktes Bauteil bilden, wobei ein als Antriebsvorrichtung vorgesehenes Stellglied in das Drehlager (15) integriert ist.

6. Bildübertragungseinrichtung nach einem der Ansprüche 1 bis 5, **dadurch gekennzeichnet, daß** wenigstens eine optische Markierung im Aufnahme-Bereich der Video-Kamera (6) zur Ansteuerung der Antriebsvorrichtung vorgesehen ist, wobei durch die Markierung eine Veränderung der Grundeinstellung der Kameraposition um einen vorgegebenen Winkel erhalten wird.

## Claims

1. An image transmission apparatus comprising a video camera and a control device having a video screen and a controller, wherein at least an image sensor of the camera is held in an adjustable mounting, and at least one driving device activated by the controller for positioning at least the image sensor relative to the recorded object is provided, **characterized in that** the video camera (6) is connected with a lamp body (2) of a surgical lamp, which lamp body is held in a fixture (4) by means of an adjustable suspension, and wherein at least the image sensor of the video camera (6) is rotatably mounted about the optical axis (7) of the video camera (6) relative to the lamp body (2).

2. The image transmission apparatus according to claim 1, **characterized in that** the video camera (6) is held in a pivot bearing (15) situated in the lamp body (2) of the surgical lamp, wherein the axis of the pivot bearing runs at least parallel to the optical axis (7) of the video camera (6).

3. The image transmission apparatus according to claim 2, **characterized in that** the axis of the pivot bearing (15) coincides with the optical axis (7) of the video camera (6).

4. The image transmission apparatus according to one of the claims 1 to 3, **characterized in that** the pivot bearing (15) can be inserted along the axis (7) in an opening on the reverse side of the lamp body (2) facing away from the light exit side.

5. The image transmission apparatus according to claim 4, **characterized in that** the pivot bearing (15) and the video camera (6) together form a compact construction unit, wherein an actuator provided as a driving device is integrated into the pivot bearing (15).

6. The image transmission apparatus according to one of the claims 1 to 5, **characterized in that** at least one optical marking is provided in a recording area of the video camera (6) for activation of the driving device, wherein owing to the marking a change of the basic adjustment of the camera position about a specified angle is achieved.

## Revendications

1. Dispositif de transfert d'image équipé d'une caméra vidéo et d'un dispositif de contrôle avec un écran et un dispositif de commande, dans lequel au moins un capteur d'image de la caméra est contenu dans un logement réglable et au moins un dispositif d'entraînement actionné au moyen du dispositif de commande en vue du positionnement d'au moins le capteur d'images par rapport au sujet est prévu, **caractérisé en ce que** la caméra vidéo (6) est reliée à un corps de lampe (2) d'un scialytique, qui est contenu dans un dispositif de fixation (4) au moyen d'une suspension réglable, où au moins le capteur d'image de la caméra vidéo (6) est disposé pivotant autour de l'axe optique (7) de la caméra vidéo par rapport au corps de lamp (2).

2. Dispositif de transfert d'image selon la revendication 1, **caractérisé en ce que** la caméra vidéo (6) est contenue dans un coussinet de pivotement (15) se trouvant dans le corps de lampe (2) du scialytique, où l'axe du coussinet de pivotement s'étend au moins parallèlement par rapport à l'axe optique (7) de la caméra vidéo (6).

3. Dispositif de transfert d'image selon la revendication 2, **caractérisé en ce que** l'axe du coussinet de pivotement (15) s'étend le long de l'axe optique (7) de la caméra vidéo (6).

4. Dispositif de transfert d'image selon l'une des revendications 1 à 3, **caractérisé en ce que** le coussinet de pivotement (15) peut être inséré dans un orifice sur le côté arrière du corps de lampe (2) opposé au côté de sortie de lumière le long de l'axe (7).

5. Dispositif de transfert d'image selon la revendication 4, **caractérisé en ce que** le coussinet de pivotement (15) et la caméra vidéo (6) forment conjointement un élément compact, dans lequel un élément de réglage prévu en tant que dispositif d'entraînement est intégré dans le coussinet de pivotement (15).

6. Dispositif de transfert d'image selon l'une des revendications 1 à 5, **caractérisé en ce qu'**au moins un repère optique est prévu dans la zone d'enregistrement de la caméra vidéo (6) en vue de la commande du dispositif d'entraînement, dans lequel une modification du réglage de base de la position de la caméra autour d'un angle prédéterminé est obtenue par le marquage.
